# EUROPEAN PATENT SPECIFICATION

(11) **EP 1 039 619 B1**
(45) Date of publication and mention of the grant of the patent: **14.12.2005**
(21) Application number: 00105496.4
(22) Date of filing: 15.03.2000
(51) Int. Cl.: H02K 23/52, H02K 7/18, H02K 7/10, H02K 7/118, H02K 23/62, H02K 23/68

(54) **Starter/generator apparatus for four-cycle internal combustion engine**
Anlasser/Generator für eine Viertaktbrennkraftmaschine
Démarreur/Alternateur pour moteur à combustion interne à quatre temps

(30) Priority: 24.03.1999 JP 7933799
(43) Date of publication of application: 27.09.2000
(60) Divisional application: 05012041.9
(73) Proprietor: HONDA GIKEN KOGYO KABUSHIKI KAISHA, Minato-ku, Tokyo (JP)
(72) Inventor: Sekiya, Yoshiyuki, K.K. Honda Gijutsu Kenkyusho, Wako-shi, Saitama (JP); Shimizu, Jiro, c/o K.K. Honda Gijutsu Kenkyusho, Wako-shi, Saitama (JP); Yagasaki, Akio, c/o K.K. Honda Gijutsu Kenkyusho, Wako-shi, Saitama (JP); Motodate, Shoji, c/o K.K. Honda Gijutsu Kenkyusho, Wako-shi, Saitama (JP)
(74) Representative: Liska, Horst

(56) References cited:
- DE-A- 2 448 069
- GB-A- 645 085
- US-A- 1 586 184
- US-A- 1 736 662
- US-A- 3 014 142
- US-A- 3 646 820
- US-A- 4 138 629
- US-A- 4 219 739
- US-A- 4 754 154
- US-A- 5 458 098
- PATENT ABSTRACTS OF JAPAN vol. 1997, no. 12, 25 December 1997 (1997-12-25) & JP 09 215292 A (HONDA MOTOR CO LTD), 15 August 1997 (1997-08-15)
- PATENT ABSTRACTS OF JAPAN vol. 1997, no. 03, 31 March 1997 (1997-03-31) & JP 08 289520 A (HONDA MOTOR CO LTD), 1 November 1996 (1996-11-01)

## Description

This invention relates to a four-cycle internal combustion engine with a starter/generator apparatus.

A starter/generator apparatus used in a conventional internal combustion engine (hereinafter referred to as "engine") is described taking an apparatus disclosed in the official gazette of Japanese Patent Laid-open No. JP-A-09-215292 as an example. FIG. 11 is a sectional view of a starter/generator apparatus used in a two-cycle engine for a motorcycle. The starter/generator apparatus 100 is provided sidewardly of a crankcase 101. An inner rotor 102 has a rotor boss 103 fitted at an end portion of a crankshaft 104 and is fastened to the crankshaft 104 for integral rotation by a nut 105.
Permanent magnets 106 are mounted at six different locations on an outer periphery of the rotor boss 103, and a rotor cover 107 is fitted on the permanent magnets 106.

A cylindrical portion 103a is provided to project on one side face of the rotor boss 103, and a cylindrical governor inner member 108 is fitted on an outer periphery of the cylindrical portion 103a for sliding movement in an axial direction of the crankshaft 104. It is to be noted that relative movement in a direction of rotation between the governor inner member 108 and the cylindrical portion 103a of the rotor boss 103 is restricted by a pin not shown. A compression spring 109 is accommodated between the governor inner member 108 and the cylindrical portion 103a such that it exerts a force to act in a direction in which the governor inner member 108 and the rotor boss 103 are moved away from each other.

A governor outer member 110 provided such that it surrounds the governor inner member 108 from the outer periphery of it is secured to one side face of the rotor boss 103 by a rivet 111. The governor inner member 108 and the governor outer member 110 form a pocket 113 in which a metal ball 112 as a governor weight is accommodated, and the sectional shape of the pocket 113 has a tapering shape tapering towards the governor outer member 110 side.

A brush holder 114 is provided on an outer side of a bottom portion of the governor inner member 108, and the brush holder 114 and the governor inner member 108 are assembled together by a bolt 115. Brushes 117 each biased by a compression spring 116 are provided on the brush holder 114.

Generating coils 119 and starting coils 120 are wound around stator cores 118a of an outer stator 118 disposed on an outer periphery of the inner rotor 102, and a cylindrical portion 121 extending from the stator cores 118a covers over the governor outer member 110 and part of the brush holder 114. Further, a commutator holder 122 is connected to and supported by an end portion of the cylindrical portion 121 of the stator cores 118a. Commutator pieces 123 on which the brushes 117 slide are secured to the commutator holder 122.

In the construction described above, when current is supplied from a battery not shown to the starting coils 120 through the commutator pieces 123 and the brushes 117, torque is generated on the inner rotor 102, and the crankshaft 104 is rotated to start the engine. As the speed of rotation of the inner rotor 102 increases, the metal ball 112 in the pocket 113 is moved toward the governor outer member 110 side by a centrifugal force and acts to move the governor inner member 108 away from the governor outer member 110 in an axial direction of the crankshaft 104, and the brush holder 114 is moved together with the governor inner member 108. As a result, the brushes 117 are spaced away from the commutator pieces 123. After the brushes 117 are spaced away from the commutator pieces 123, the crankshaft 104 is driven to rotate by the engine, and as a result, electric power is generated by the generating coils 119 and current is supplied to the battery not shown.

In the starter/generator apparatus, since the governor mechanism and the brush mechanism are provided adjacent the outer side of the inner rotor, that is, at positions spaced away from a bearing of the crankshaft, there is a problem that the projecting amount of the crankshaft in a direction toward its end is great. In a four-cycle engine wherein a camshaft is provided in a cylinder head, driving means for the camshaft is sometimes disposed on a crankshaft. Accordingly, in this instance, the distance from a bearing portion of the crankshaft to an end portion of the crankshaft further increases. Particularly where a body having a high moment of inertia such as a governor weight is provided at the end of the shaft, this causes an increase in size of the engine in that the diameter of the crankshaft must be increased or the like.

FR 27 44 297 (a family member of JP-A-09215292), Fig. 18 shows an internal combustion engine in accordance with the preamble of claim 1. There, the crankshaft fully extends through the starter generator and through the flange of the fan hub.

This arrangement is disadvantageous on the one hand because the crankshaft of the known four-cycle engine has a large axial length, and is disadvantageous on the other hand, due to its complex mounting structure with respect to the inner rotor and the fan hub, both rotated by the crankshaft.

In the known engine, the inner rotor is fixed to a conical portion of the crankshaft by a first nut, whereas a bushing functioning as the fan hub surrounds the crankshaft and is fixed to said crankshaft by a second nut screwed onto the crankshaft at its longitudinal end. Consequently, two mounting operations are necessary in order to fix the inner rotor and the fan hub to the crankshaft.

A further arrangement of an inner rotor and a fan hub connected to a crankshaft of an engine is known from document US-A-4779905, in particular in the embodiment shown in fig. 1 of this document. The latter known crankshaft has, compared to that of the above mentioned FR 27 44 297, a comparably short axial length. Furthermore, the inner rotor is mounted to the crankshaft by a central bolt penetrating the inner rotor and being screwed into a longitudinal end of the crankshaft.

However, the mounting structure of the latter known engine also affords at least two mounting operations to achieve a crankshaft ready for operation. Namely, the fan hub is first fixed to the outer circumference of the inner rotor at a longitudinal end thereof, and then the assembly of inner rotor and fan hub is fixed to the crankshaft by said central single bolt.

It is, according to the above, an object of the present invention to provide an internal combustion engine of the generic kind, which can reduce the axial length of the crankshaft of the engine and which can further be assembled more easily than the engine known from the state of the art.

This object is attained by an internal combustion engine exhibiting all features of new claim 1.

According to an embodiment of the present invention the driving means for the valve driving system, the governor means, the inner rotor and the feeding brush means are disposed in this order toward the outer side from a crank chamber on the crankshaft. By such disposition as just described, the extent over which the crankshaft or a portion provided on the crankshaft projects toward the outer side can be reduced. Further, since a portion having a high moment of inertia such as the governor means is disposed rather near to the center of the crankshaft, in other words, nearer to the crank chamber, the crankshaft need not have a great diameter, and miniaturization of the engine can be anticipated.

As apparent from the foregoing description, according to the invention as set forth in claim 1, when driving force is provided from a crankshaft to a camshaft provided on a cylinder head of a four-cycle engine, the extent over which such elements as an inner rotor for starting and generation provided on the crankshaft project outwardly can be reduced. Accordingly, miniaturization of the entire engine can be anticipated.

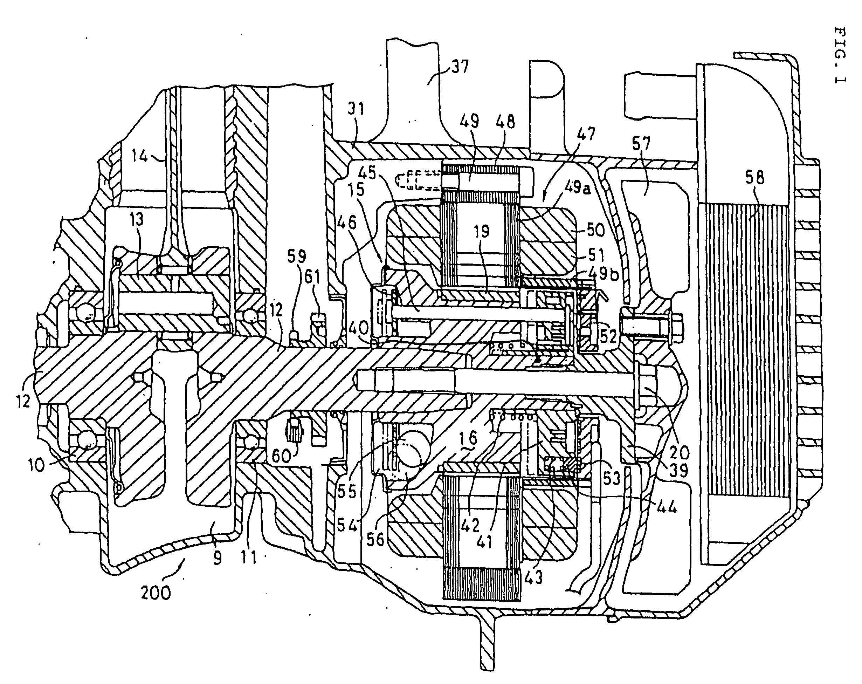

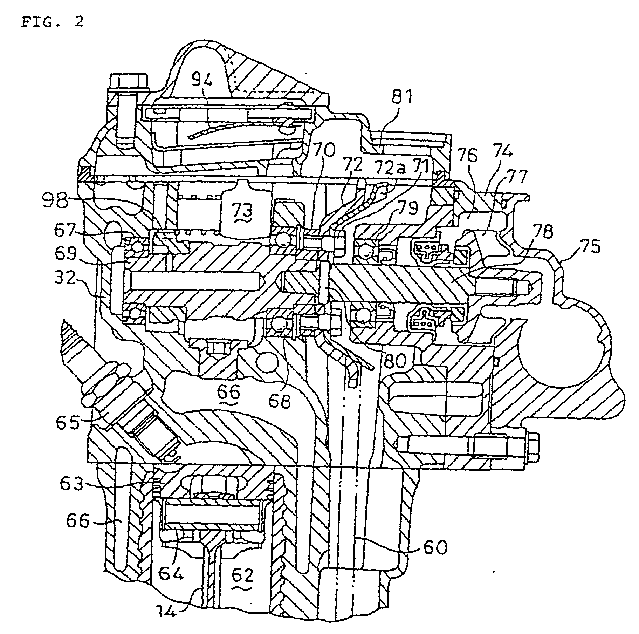

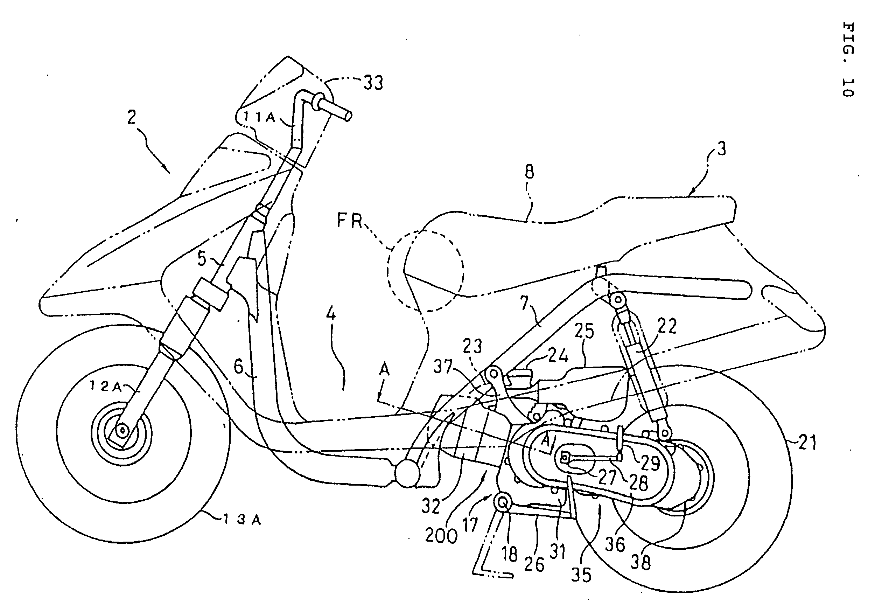

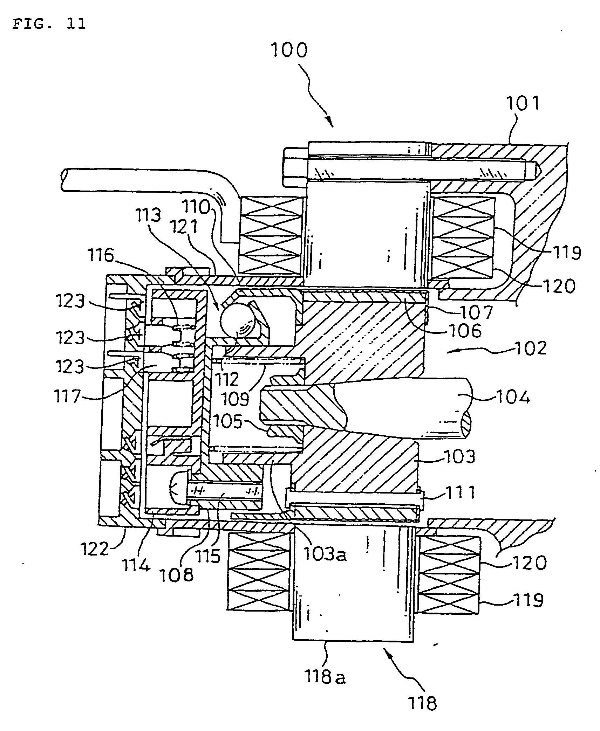

In the following, the present invention is described in detail with special reference to figure 1. Figs. 2 to 9 concern the same engine as fig. 1 but relate to technical features which are not covered by claim 1. Fig. 10 shows the motocycle to which the engine of fig. 1 is applied, as a whole. Fig. 11 shows prior art.

FIG. 1 is a sectional view of an engine including a starter/generator apparatus according to an embodiment of the present invention.

FIG. 2 is a side elevational sectional view of a cylinder head and associated members therearound of the engine shown in fig. 1.

FIG. 3 is a front elevational sectional view of the cylinder head and associated members therearound of the engine.

FIG. 4 is a rear elevational sectional view of the cylinder head and associated members therearound of the engine.

FIG. 5 is a sectional view of an automatic gear and associated members therearound of the engine shown in fig. 1.

FIG. 6 is a sectional view of a centrifugal clutch and the automatic gear of the engine shown in fig. 1.

FIG. 7 is a sectional view of a lubricating system of the engine shown in fig 1.

FIG. 8 is a side elevational sectional view of a crankshaft and associated members therearound showing an arrangement of a sensor (crank pulser) which generates a crank pulse.

FIG. 9 is a front elevational sectional view of the crankshaft and associated members therearound.

FIG. 10 is a side elevational view of a motorcycle which installs the engine including the starter/generator apparatus according to the embodiment of the present invention.

FIG. 11 is a partial sectional view of a conventional starter/generator apparatus.

FIG. 10 is a side elevational view of an entire motorcycle on which a starter/generator apparatus which is a part of an embodiment of the present invention is carried. Referring to FIG. 10, a body front section 2 and a body rear section 3 are connected to each other by a low floor section 4, and a skeleton of a body is formed from a body frame including a down tube 6 and a main pipe 7. A fuel tank and an accommodation box (both not shown) are supported on the main pipe 7, and a seat 8 is disposed on them. The seat 8 can serve also as a lid for a luggage box disposed below the seat 8, and the luggage box is constructed so as to be opened or closed by a hinge mechanism provided at a front portion FR thereof.

Meanwhile, on the body front section 2, a steering head 5 is provided on the down tube 6, and a front fork 12A is supported for pivotal motion by the steering head 5. A handle bar 11A is mounted at an upper end of the front fork 12A which extends upwardly while a front wheel 13A is supported for rotation at a lower end of the front fork 12A. An upper portion of the handle bar 11A is covered with a handle cover 33 which serves also as a meter panel.

A link member (hanger) 37 is supported for pivotal motion at an intermediate portion of the main pipe 7, and a swing unit 17 is connected to and supported on the main pipe 7 for swinging movement by the hanger 37. A single-cylinder four-cycle engine 200 is carried at a front portion of the swing unit 17. A non-stage transmission 35 is formed such that it extends rearwardly from the engine 200, and a rear wheel 21 is supported for rotation on a speed reduction mechanism 38 provided at a rear portion of the non-stage transmission 35 with a centrifugal clutch interposed therebetween. A rear cushion 22 is interposed between an upper end of the speed reduction mechanism 38 and an upper bent portion of the main pipe 7. An intake pipe 23 extending from a cylinder head 32 of the engine 200 is connected to a front portion of the swing unit 17, and a carburetor 24 and an air cleaner 25 connected to the carburetor 24 are disposed for the intake pipe 23.

A kick arm 28 is securely mounted at a base end thereof on a kick shaft 27 which extends from a transmission case cover 36 of the belt type non-stage transmission 35, and a kick pedal 29 is provided at an end of the kick arm 28. A main stand 26 is mounted for pivotal motion on a pivot 18 provided at a lower portion of a swing unit case 31, and upon parking, the main stand 26 is erected uprightly (indicated by a chain line).

Subsequently, the engine 200 mentioned hereinabove is described in detail. FIG. 1 is a sectional view of the engine 200 showing a structure of the starter/generator apparatus and is a sectional view taken along line A-A of FIG. 10. Referring first to FIG. 1, a crankshaft 12 supported for rotation by main bearings 10, 11 is provided on the swing unit case 31 which includes the hanger 37 held by the main pipe 7 described above, and a connecting rod 14 is connected to the crankshaft 12 by a crank pin 13. An inner rotor 15 of the starter/generator apparatus is provided at one end portion of the crankshaft 12 which extends from a crank chamber 9.

The inner rotor 15 includes a rotor boss 16 and permanent magnets 19 fitted on an outer periphery of the rotor boss 16. The permanent magnets 19 are, for example, neodymium-iron-boron type magnets and are provided at six locations at equal angular distances around the rotor boss 16. The rotor boss 16 is fitted at a central portion thereof with a tapering portion of an end of the crankshaft 12. A flange member 39 is disposed at an end of the rotor boss 16 (end on the opposite side to the crankshaft 12), and the rotor boss 16 is secured to the crankshaft 12 together with the flange member 39 by a bolt 20.

A small diameter cylindrical portion 40 projecting to the flange member 39 side is formed on the rotor boss 16, and a brush holder 41 is provided on an outer periphery of the small diameter cylindrical portion 40 for sliding movement on the small diameter cylindrical portion 40. The brush holder 41 is biased toward the flange member 39 by a compression coil spring 42. Brushes 44 each biased by a compression coil spring 43 are provided on the brush holder 41. A connection pin 45 extending in parallel to the center axis of the crankshaft 12 extends through the rotor boss 16, and an end of the connection pin 45 is connected to the brush holder 41 while the other end of the connection pin 45 is connected to a plate 46 of the governor (hereinafter described in detail).

Stator cores 48 of an outer stator 47 disposed on an outer periphery of the inner rotor 15 are secured to the swing unit case 31 by bolts 49. A generating coil 50 and a starting coil 51 are wound around a yoke 49a of each of the stator cores 48, and a cylindrical portion 49b extending from the stator cores 48 covers over the brush holder 41 described above. A commutator holder 52 is connected to an end portion of the cylindrical portion 49b, and commutator pieces 53 are secured to the commutator holder 52 for sliding movement with the brushes 44. In particular, the commutator pieces 53 are disposed at positions opposing to the brushes 44 biased by the compression coil springs 43 described hereinabove.

It is to be noted that, although only one brush 44 is shown in FIG. 1, naturally not only the one but a required number of such brushes 44 are provided in a direction of rotation of the inner rotor 15. An example of the quantity and the shape of the brushes and the commutator pieces is disclosed in the specification of a preceding application (Japanese Patent Laid-open No. Hei 9-215292) by the applicant of the present application. Further, the stroke of the brushes 44 is limited to a predetermined amount so that, when the brush holder 41 is displaced to the crankshaft 12 side by a governor which is hereinafter described, the brushes 44 are spaced away from the commutator pieces 53. For the limitation of the stroke, stopping means not shown is provided between the brush holder 41 and the brushes 44.

A governor 54 for automatically changing over between a starting mode and a generation mode is provided at an end portion of the rotor boss 16, that is, on a fitting portion side of the rotor boss 16 with the crankshaft 12. The governor 54 includes the plate 46 described hereinabove, and a roller 55 serving as a governor weight for displacing the plate 46 toward the center axis of the crankshaft 12. While the governor weight (roller) 55 is preferably formed from a core made of a metal and covered with a cover of a resin, it may be a metal core having no resin cover provided thereon or may be formed from a resin as a whole. A pocket 56 for accommodating the governor weight (roller) 55 therein is formed on the rotor boss 16, and the pocket 56 has a tapering cross section which is concave on the outer stator 47 side as seen in FIG. 1.

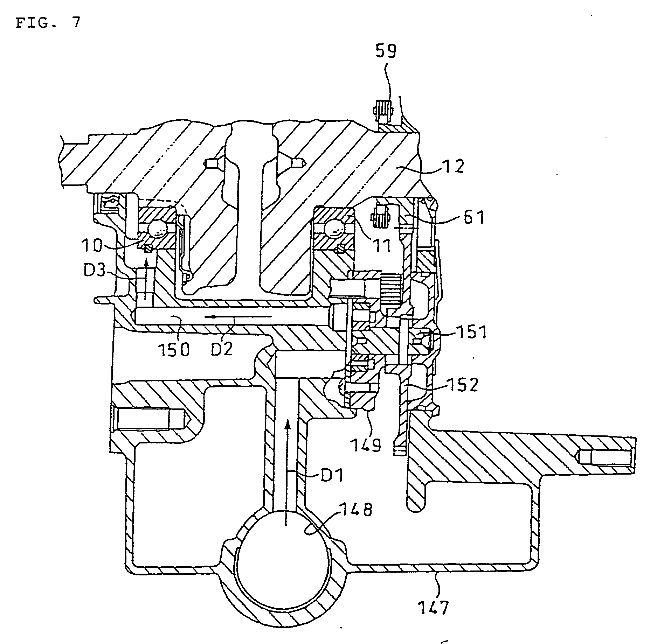

A radiator fan 57 is mounted on the flange member 39, and a radiator 58 is provided in an opposing relationship to the radiator fan 57. Further, a sprocket wheel 59 is secured to the crankshaft 12 between the inner rotor 15 and the main bearing 11, and a chain 60 for acquiring power for driving a camshaft (refer to FIG. 2) from the crankshaft 12 is wrapped around the sprocket wheel 59. It is to be noted that the sprocket wheel 59 is formed integrally with a gear wheel 61 for transmitting power to a pump which circulates lubricating oil. The gear wheel 61 transmits power to another gear wheel secured to a drive shaft for a gear pump which is hereinafter described with reference to FIG. 7.

In the construction described above, if a start button is depressed to apply a voltage from a battery (not shown) to the commutator pieces 53, then current flows to the starting coil 51 through the brushes 44 so that the inner rotor 15 is rotated. As a result, the crankshaft 12 coupled to the inner rotor 15 is rotated to start the engine 200. As the speed of rotation of the engine 200 increases, the governor weight (roller) 55 is acted upon by a centrifugal force and is moved toward an outer periphery of the rotor boss 16 in the pocket 56 until it comes to a position indicated by a chain line in FIG. 1.

As the governor weight (roller) 55 moves, also the plate 46 and the connection pin 45 which is held in engagement with the plate 46 are displaced as indicated by chain lines. Since the other end of the connection pin 45 is held in engagement with the brush holder 41, also the brush holder 41 is displaced similarly. Since the stroke of the brushes 44 is limited as described above, if the brush holder 41 is displaced by an amount greater than the stroke, then the contact between the brushes 44 and the commutator pieces 53 is cancelled. After the brushes 44 are displaced from the commutator pieces 53, the crankshaft 12 is driven by the engine to rotate, and as a result, electric power is generated by the generating coils 50 and current is supplied to the battery.

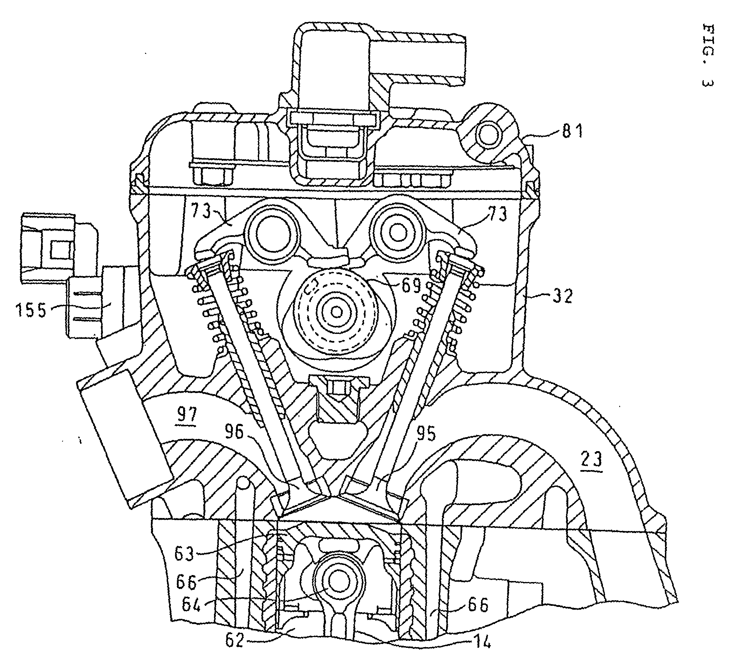

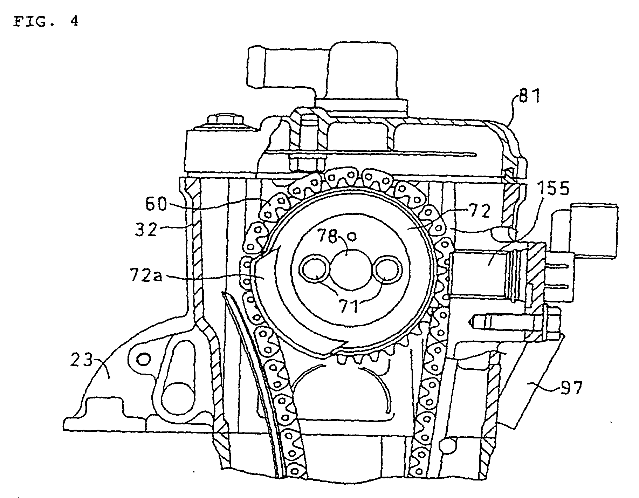

Subsequently, a structure of a head and associated members therearound of the engine 200 is described. This structure is not part of the present invention as defined in claim 1. FIG. 2 is a side elevational sectional view of a head of the engine and associated members therearound, FIG. 3 is a front elevational sectional view of them, and FIG. 4 is a rear elevational sectional view of them. A piston 63 disposed in a cylinder 62 is connected to the small end side of the connecting rod 14 by a piston pin 64. An ignition plug 65 is screwed to the cylinder head 32, and an electrode portion of the ignition plug 65 faces a combustion chamber formed between the head of the piston 63 and the cylinder head 32. The cylinder 62 is surrounded by a water jacket 66.

A camshaft 69 supported for rotation by bearings 67, 68 is provided above the cylinder 62 in the cylinder head 32. An attachment 70 is fitted on the camshaft 69, and a cam sprocket wheel 72 and a reluctor portion 72a for cooperating with a cam sensor 155 to generate a cam pulse are fastened together with each other to the attachment 70. The chain 60 extends around the cam sprocket wheel 72. Rotation of the sprocket wheel 59 (refer to FIG. 1) described above, that is, rotation of the crankshaft 12, is transmitted to the camshaft 69 by the chain 60.

Rocker arms 73 are provided above the camshaft 69, and each of the rocker arms 73 is rocked in accordance with a cam profile of the camshaft 69 as the camshaft 69 rotates. The cam profile of the camshaft 69 is determined so that each of an intake valve 95 and an exhaust valve 96 is opened and closed in response to a predetermined stroke of a four-cycle engine. The intake pipe 23 is opened and closed by the intake valve 95, and an exhaust pipe 97 is opened and closed by the exhaust valve 96.

An exhaust cam and an intake cam are formed integrally on the camshaft 69, and a decomp cam 98 which engages the camshaft 69 only for a direction of reverse rotation is provided adjacent the cams. When the camshaft 69 rotates reversely, the decomp cam 98 is rotated following the rotation of the camshaft 69 to a position at which it extends farther than the profile of the outer periphery of the exhaust cam.

Accordingly, when the camshaft 69 rotates forwardly, the exhaust valve 96 can be positioned at a little lifted position, and the load in the compression stroke of the engine can be reduced. Consequently, since the torque when the crankshaft is started can be reduced, a starter of a small size can be used as the starter for the four-cycle engine. As a result, there is an advantage that associated members around the crank can be made compact and the bank angle can be made great. It is to be noted that, when the cam rotates forwardly for a little while, the outer profile of the decomp cam 98 returns to a position within the profile of the outer periphery of the exhaust cam.

A pump chamber 76 surrounded by a water pump base 74 and a water pump housing 75 is formed in the cylinder head 32. A pump shaft 78 having an impeller 77 is disposed in the pump chamber 76. The pump shaft 78 is fitted at an end portion of the camshaft 69 and is held for rotation by means of a bearing 79. Driving force of the pump shaft 78 is obtained from a pin 80 which engages a central portion of the cam sprocket wheel 72.

An air reed valve 94 is provided on a head cover 81. The air reed valve 94 takes air in to augment the emission when a negative pressure is produced in the exhaust pipe 97. It is to be noted that, while seal members are provided at several locations around the pump chamber 76, description of individual ones of them is omitted.

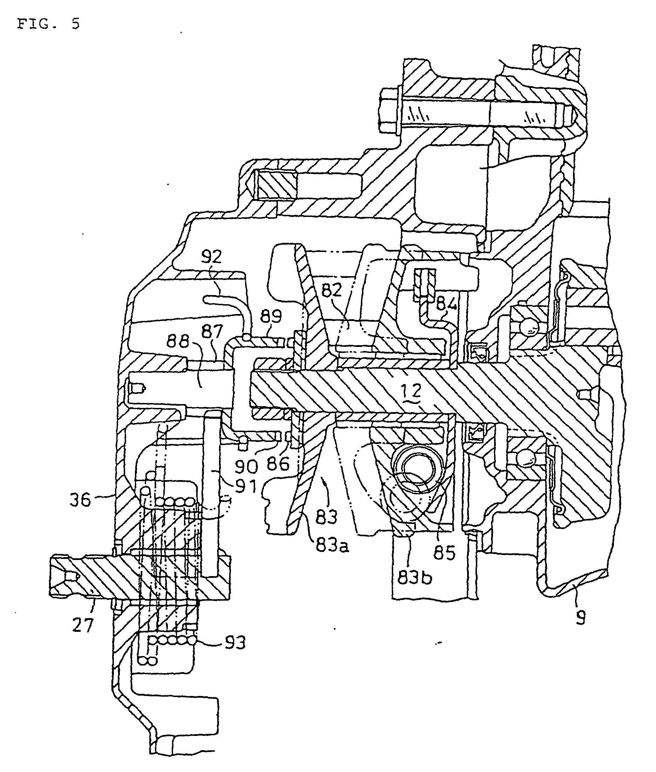

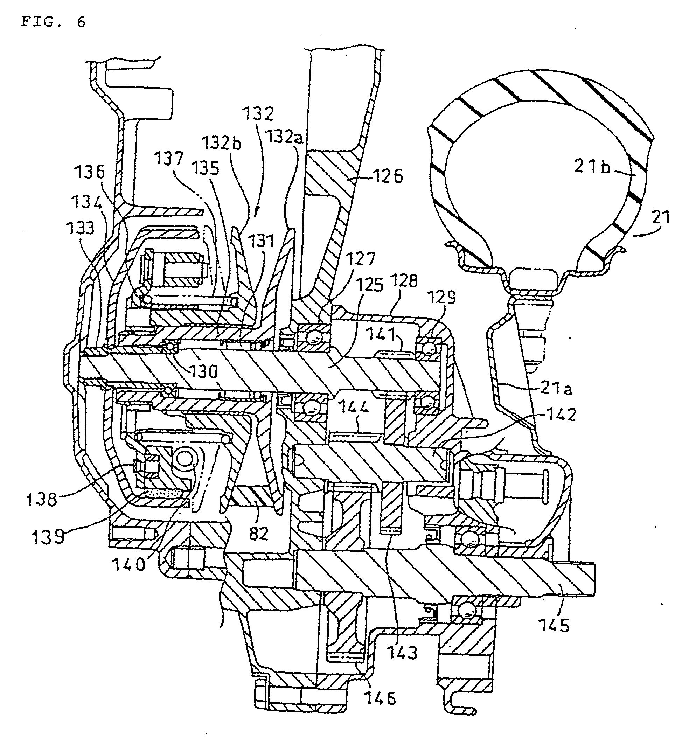

Subsequently, an automatic gear is explained which transmits rotation of the engine 200 to the rear wheel while changing the speed of it. The automatic gear is not part of the present invention as defined in claim 1. FIGS. 5 and 6 are sectional views of the automatic gear of the engine, and FIG. 5 shows the driving side while FIG. 6 shows the driven side. Referring to FIG. 5, a pulley 83 for wrapping a V-belt 82 therearound is provided at an end portion of the crankshaft 12 on the side opposite to the side on which the inner rotor 15 of the starter/generator apparatus described above is provided. The pulley 83 is composed of a fixed pulley piece 83a fixed against movement in a rotational direction and an axial direction with respect to the crankshaft 12 and a movable pulley piece 83b slidably movable in an axial direction with respect to the crankshaft 12. A holder plate 84 is provided on the rear face of the movable pulley piece 83b, that is, a face of the movable pulley piece 83b which does not contact with the V-belt 82. The holder plate 84 is restricted in movement in both of a rotational direction and an axial direction with respect to the crankshaft 12 and rotates integrally with the crankshaft 12. A free space defined by the holder plate 84 and the movable pulley piece 83b forms a pocket in which a roller 85 serving as a governor weight is accommodated.

Meanwhile, a clutch mechanism for coupling power to the rear wheel 21 is constructed in the following manner. Referring to FIG. 6, a main shaft 125 of the clutch is supported by a bearing 127 fitted in a casing 126 and another bearing 129 fitted in a gear box 128. A fixed pulley piece 132a of a pulley 132 is supported on the main shaft 125 by a pair of bearings 130 and 131. A cup-shaped clutch plate 134 is secured to an end portion of the main shaft 125 by a nut 133.

A movable pulley piece 132b of the pulley 132 is provided for sliding movement in a longitudinal direction of the main shaft 125 on a sleeve 135 of the fixed pulley piece 132a. The movable pulley piece 132b engages a disk 136 for integral rotation around the main shaft 125. A compression coil spring 137 which exerts a repulsive force in a direction in which the distance between the disk 136 and the movable pulley piece 132b is increased is provided between the disk 136 and the movable pulley piece 132b. Further, a shoe 139 supported for rocking motion by a pin 138 is provided on the disk 136. When the speed of rotation of the disk 136 increases, the shoe 139 is acted upon by a centrifugal force and rocked toward the outer periphery until it is brought into contact with the inner periphery of the clutch plate 134. It is to be noted that a spring 140 is provided so that the shoe 139 is brought into contact with the clutch plate 134 when the speed of rotation of the disk 136 reaches a predetermined level.

A pinion 141 is secured to the main shaft 125, and the pinion 141 is held in meshing engagement with a gear wheel 143 secured to an idle shaft 142. Further, a pinion 144 secured to the idle shaft 142 is held in meshing engagement with a gear wheel 146 of an output power shaft 145. The rear wheel 21 is composed of a rim 21a and a tire 21b fitted around the rim 21a, and the rim 21a is secured to the output power shaft 145.

In the construction described above, when the engine speed is in the minimum, the roller 85 is positioned as indicated by a solid line in FIG. 5 and the V-belt 82 is wrapped around a minimum diameter portion of the pulley 83. The movable pulley piece 132b of the pulley 132 is biased by the compression coil spring 137 so that it is displaced to a position of a solid line of FIG. 6, and the V-belt 82 is wrapped around a maximum diameter portion of the pulley 132. In this condition, since the main shaft 125 of the centrifugal clutch is rotated at the lowest speed, the centrifugal force applied to the disk 136 is in the minimum, and since the shoe 139 is drawn inwardly by the spring 140, it does not contact with the clutch plate 134. In short, rotation of the engine is not transmitted to the main shaft 125 and the rear wheel 21 is not rotated.

On the other hand, when the engine speed is high, the roller 85 is displaced to the direction of the outer periphery by the centrifugal force. The position indicated by a chain line in FIG. 5 is the position of the roller 85 when the speed of rotation is in the maximum. When the roller 85 is displaced to the direction of the outer periphery, since the movable pulley piece 83b is pushed to move to the fixed pulley piece 83a side, the V-belt 82 is moved toward the maximum diameter portion of the pulley 83. Consequently, on the centrifugal clutch side, the movable pulley piece 132b is displaced against the compression coil spring 137, and the V-belt 82 is moved to the minimum diameter portion of the pulley 132. Accordingly, the centrifugal force acting upon the disk 136 increases, and the shoe 139 projects outwardly against the spring 140 until it is brought into contact with the clutch plate 134. As a result, rotation of the engine is transmitted to the main shaft 125, and the power is transmitted to the wheel 21 through the gear train. In this manner, the diameters of the portions of the pulley 83 on the crankshaft 12 side and the pulley 132 on the centrifugal clutch side around which the V-belt 82 is wrapped are varied in accordance with the speed of rotation of the engine and a speed changing operation is achieved.

Whereas, upon starting of the engine, the starting coil 51 can be energized to excite the engine as described above, in the present embodiment, also a kick starting apparatus wherein the engine 200 is started by a kicking operation, is employed together. The kick starting apparatus is described with additional reference to FIG. 5. A driven dog gear wheel 86 for kick starting is secured to a rear face of the fixed pulley piece 83a described above. Meanwhile, a support shaft 88 having a helical gear 87 is supported for rotation on the cover 36 side. A cap 89 is secured to an end portion of the support shaft 88, and a driving dog gear wheel 90 for meshing with the driven dog gear wheel 86 described above is formed on an end face of the cap 89.

Further, the kick shaft 27 is supported for rotation on the cover 36, and a sector helical gear 91 which is held in meshing engagement with the helical gear 87 described above is welded to the kick shaft 27. A spline is formed at an end portion of the kick shaft 27, that is, a portion of the kick shaft 27 which projects outwardly from the cover 36, and this spline engages another spline provided on the kick arm 28 (refer to FIG. 10). It is to be noted that reference numerals 92, 93 denote each a return spring.

In the construction described above, if the kick pedal 29 is kicked down, then the kick shaft 27 and the sector helical gear 91 are rotated against the return spring 93. The support shaft 88 and the sector helical gear 91 have spiral directions set so that, when the sector helical gear 91 is rotated by a kicking down operation of the kick pedal, a thrust force for urging the helical gear 87 toward the pulley 83 side may be exerted. Accordingly, when the kick pedal 29 is kicked down, the helical gear 87 is displaced toward the pulley 83 side and the driving dog gear wheel 90 formed on the end face of the cap 89 is brought into engagement with the driven dog gear wheel 86. As a result, the crankshaft 12 is rotated, thereby allowing starting of the engine 200. After the engine is started, if the kicking down of the kick pedal 29 is reduced so that the sector helical gear 91 is rotated reversely by the return springs 92, 93, then the engagement between the driving dog gear wheel 90 and the driven dog gear wheel 86 is cancelled.

Subsequently, a lubricating oil supply system which is not part of the present invention as defined in claim 1 is described with reference to FIG. 7. The oil supplying side is provided below the crank chamber 9. A duct 148 for introducing oil is formed in an oil pan 147, and oil is taken into a gear pump 149 in a direction of an arrow mark D1. The oil taken in the gear pump 149 is raised in pressure and discharged into a duct 150 and passes the duct 150 in directions indicated by arrow marks D2, D3 until it is discharged into the crank chamber.

Here, a gear wheel 152 is coupled to a pump shaft 151 of the gear pump 149, and the gear wheel 61 coupled to the crankshaft 12 is held in meshing engagement with the gear wheel 152. In particular, the gear pump 149 is driven by rotation of the crankshaft 12 and circulates the oil for lubrication.

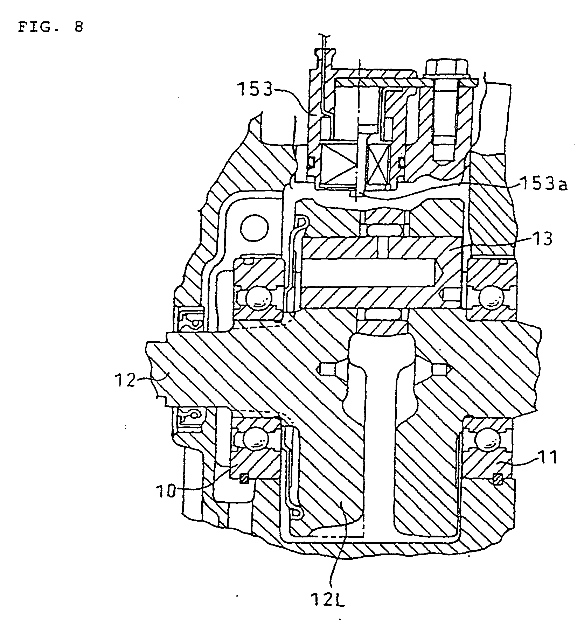

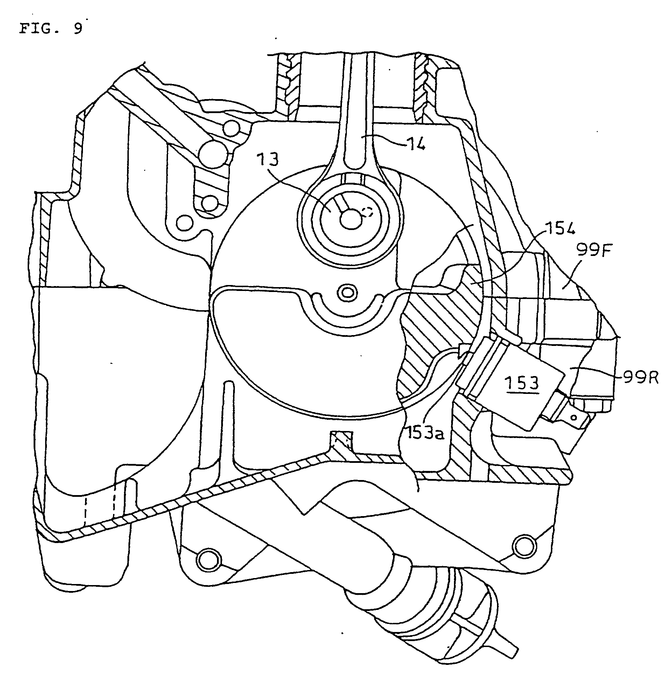

Subsequently, an arrangement of a sensor for outputting a crank pulse is described. This arrangement is not part of the present invention as defined in claim 1. FIG. 8 is a side elevational sectional view of the crankshaft and associated members therearound showing an arrangement of a sensor (crank pulser) for generating a crank pulse, and FIG. 9 is a front elevational sectional view of them. Referring to FIGS. 8 and 9, the crankcase is composed of a front crankcase 99F and a rear crankcase 99R, and a crank pulser 153 is provided on the rear crankcase 99R side such that it extends perpendicularly to the crankshaft 12. And, a detecting end portion 153a of the crank pulser 153 is disposed in an opposing relationship to an outer peripheral edge of a web 12L. A projection or reluctor portion 154 is formed on an outer periphery of the web 12L, and the crank pulser 153 is magnetically coupled to the reluctor portion 154 to output a detection signal of a crank angle.

As described above, in the present example, the sprocket wheel 59 for driving the camshaft 69 and the gear wheel 61 for driving the oil pump are mounted on the crankshaft 12 adjacent the bearing 11 on which the crankshaft 12 is supported. And, at a position neighboring the sprocket wheel 59 and the gear wheel 61, that is, at a position not far from the main bearing 11, the inner rotor 15 including the permanent magnets 19 is disposed. Particularly, the governor weight 55 of the governor mechanism which automatically change over starting and generation is disposed in the proximity of the bearing 11.

The invention miniaturizes a four-cycle engine wherein camshaft driving means is provided on a crankshaft. A sprocket wheel 59 for driving a camshaft is mounted on a crankshaft 12 which projects from a crank chamber 9, and a starter/generator apparatus is provided on the outer side with respect to the sprocket wheel 59. A governor 54 including a governor weight 55 which operates with a centrifugal force is provided on the side of an inner rotor 15 adjacent the sprocket wheel 59 while a brush holder 41 including brushes 44 is provided on the outer side of the inner rotor 15. In order to bring the brushes 44 into and out of contact with commutator pieces 53 in response to a movement of the governor weight 55, the governor 54 and the brush holder 41 are connected to each other by a connection pin 45. By the construction described, the extent over which the starter/generator apparatus projects to the outer side can be reduced.

## Claims

1. Internal combustion engine with a crankshaft (12), a cylinder head (32) and a starter/generator apparatus comprising:
an inner rotor (15) provided on said crankshaft (12) and having a permanent magnet (19) disposed on a circumference thereof;
an outer stator (47) disposed around an outer periphery of said inner rotor (15),
a starting coil (51) and a generating coil (50) wound on said outer stator (47),
governor means (54) provided on said inner rotor (15) on the side facing a crank of said crankshaft (12),
feeding brush means (41, 44) for said starting coil (51) provided on said inner rotor (15) for displacement in an axial direction of said inner rotor (15) on the side opposite to the side on which said governor means (54) is provided, and
connection means (45) for connecting said governor means (54) and said feeding brush means (41, 44) to each other in order to bring said feeding brush means (41, 44) into and out of contact with the feeding side,
**characterized in**
**that** said engine is a four-cycle internal combustion engine having a valve driving system (60, 69, 72, 69) for driving an intake valve (95) and an exhaust valve (96) provided on said cylinder head (32) and driving means (59) for said valve driving system arrange on one side of said crankshaft (12), wherein said inner rotor (15) is provided at an end portion of said crankshaft (12) on the side on which said driving means (59) is provided, said governor means (54) being provided on the inner rotor (15) on the side adjacent said driving means (59), and wherein a flange member (39) is disposed at an axial end of a rotor boss (16) on the opposite side to the crankshaft (12) such that a portion of the rotor boss (16) abutting a bolt (20) and a cylindrical portion (40) of the rotor boss (16) bearing the brush holder (41) are located axially between said crankshaft (12) and said flange member (39), said rotor boss (16) and said flange member (39) being secured together to the crankshaft (12) by the bolt (20) wherein the flange member (39) is located axially between said rotor boss (16) and the head of said bolt (20).

2. Internal combustion engine according to claim 1,
**characterized in that**
said cylindrical portion (40) projects to the side of the flange member (39), wherein said brush holder (41) as a part of said feeding brush means (41, 44) is provided on an outer periphery of said cylindrical portion (40), adapted to move slidingly on said cylindrical portion (40).

3. Internal combustion engine according to claim 1 or 2,
**characterized in that**
said governor means (54) comprises a pocket (56) for accommodating a governor weight (55) therein, said pocket (56) having a tapering cross-section which is concave on the radial outer side, said tapering cross-section being provided by a pocket wall integrally formed on said rotor boss (16).

4. Internal combustion engine according to claim 3,
**characterized in that**
said governor means (54) comprises a plate (46) displaceable in an axial direction, said displacement of said plate (46) causing a displacement of a brush holder (41) as a part of said feeding brush means (41, 44).

5. Internal combustion engine according to claim 4,
**characterized in that**
said plate (46) is a planar plate.

## Patentansprüche

1. Verbrennungsmaschine mit einer Kurbelwelle (12), einem Zylinderkopf (32) und einer Anlasser/Generatorvorrichtung, umfassend:
einen inneren Rotor (15), welcher an der Kurbelwelle (12) vorgesehen ist und einen Permanentmagneten (19) aufweist, der an einem Umfang desselben angeordnet ist;
einen äußeren Stator (47), welcher um einen Außenumfang des inneren Rotors (15) herum angeordnet ist;
eine Anlasserspule (51) und eine Generatorspule (50), welche auf den äußeren Stator (47) gewickelt sind,
ein Reglermittel (54), welches an dem inneren Rotor (15) auf der Seite vorgesehen ist, die zu einer Kurbel der Kurbelwelle (12) hinweist,
ein Bürstenzufuhrmittel (41, 44) für die Anlasserspule, welches an dem inneren Rotor (15) für eine Verlagerung in eine axiale Richtung des inneren Rotors (15) auf der Seite vorgesehen ist, die der Seite gegenüber liegt, auf welcher das Reglermittel (54) vorgesehen ist, und
ein Verbindungsmittel (45) zum Verbinden des Reglermittels (54) und des Bürstenzufuhrmittels (41, 44) miteinander, um das Bürstenzufuhrmittel (41, 44) in Kontakt mit der Zufuhrseite zu bringen und diesen Kontakt wieder zu lösen,
**dadurch gekennzeichnet,**
**dass** die Maschine eine Viertakt-Verbrennungsmaschine mit einem Ventilantriebssystem (60, 69, 72, 69) zum Antreiben eines Einlassventils (95) und eines Auslassventils (96) ist, welche an dem Zylinderkopf (32) vorgesehen sind, und mit einem Antriebsmittel (59) für das Ventilantriebssystem, welches auf einer Seite der Kurbelwelle (12) angeordnet ist, wobei der innere Rotor (15) an einem Endabschnitt der Kurbelwelle (12) auf der Seite vorgesehen ist, auf welcher das Antriebsmittel (59) vorgesehen ist, wobei das Reglermittel (54) an dem inneren Rotor (15) auf der Seite vorgesehen ist, welche dem Antriebsmittel (59) benachbart ist, und wobei ein Flanschelement (39) an einem axialen Ende eines Rotorvorsprungs (16) auf der der Kurbelwelle (12) gegenüberliegenden Seite derart angeordnet ist, dass ein Abschnitt des Rotorvorsprungs (16), welcher an einer Schraube (20) anliegt, und ein zylindrischer Abschnitt (40) des Rotorvorsprungs (16), welcher den Bürstenhalter (41) lagert, axial zwischen der Kurbelwelle (12) und dem Flanschelement (39) angeordnet sind, wobei der Rotorvorsprung (16) und das Flanschelement (39) durch die Schraube (20) gemeinsam an der Kurbelwelle (12) befestigt sind, wobei das Flanschelement (39) axial zwischen dem Rotorvorsprung (16) und dem Kopf der Schraube (20) angeordnet ist.

2. Verbrennungsmaschine nach Anspruch 1,
**dadurch gekennzeichnet, dass**
der zylindrische Abschnitt (40) zu der Seite des Flanschelements (39) vorragt, wobei der Bürstenhalter (41) als ein Teil der Bürstenzufuhrmittel (41, 44) an einem Außenumfang des zylindrischen Abschnitts (40) vorgesehen ist, wobei er dazu ausgebildet ist, auf dem zylindrischen Abschnitt (40) zu gleiten.

3. Verbrennungsmaschine nach Anspruch 1 oder 2,
**dadurch gekennzeichnet, dass**
das Reglermittel (54) eine Tasche (56) zur Aufnahme eines Reglergewichts (55) darin umfasst, wobei die Tasche (56) einen sich verjüngenden Querschnitt aufweist, welcher an der radial äußeren Seite konkav ist, wobei der sich verjüngende Querschnitt durch eine Taschenwand vorgesehen ist, welche integral an dem Rotorvorsprung (16) ausgebildet ist.

4. Verbrennungsmaschine nach Anspruch 3,
**dadurch gekennzeichnet, dass**
das Reglermittel (54) eine Platte (46) umfasst, welche in einer axialen Richtung verlagerbar ist, wobei die Verlagerung der Platte (46) ein Verlagern eines Bürstenhalters (41) als ein Teil der Bürstenzufuhrmittel (41, 44) bewirkt.

5. Verbrennungsmaschine nach Anspruch 4,
**dadurch gekennzeichnet, dass**
die Platte (46) eine ebene Platte ist.

## Revendications

1. Moteur à combustion interne comportant un vilebrequin (12), une culasse (32) et un démarreur / alternateur comprenant :
un rotor interne (15) disposé sur ledit vilebrequin (12) et comprenant un aimant permanent (19) disposé sur une circonférence de celui-ci ;
un stator externe (47) disposé autour d'une périphérie externe dudit rotor interne (15) ;
une bobine de démarrage (51) et une bobine d'alternateur (50) enroulées sur ledit stator externe (47) ;
des moyens de régulateur (54) disposés sur ledit rotor interne (15) du côté qui fait face à une manivelle dudit vilebrequin (12) ;
des moyens de balais d'alimentation (41, 44) destinés à ladite bobine de démarrage (51) disposés sur ledit rotor interne (15) pour un déplacement dans une direction axiale dudit rotor interne (15) du côté opposé au côté sur lequel sont disposés lesdits moyens de régulateur (54) ; et
des moyens de connexion (45) destinés à connecter les uns aux autres lesdits moyens de régulateur (54) et lesdits moyens de balais d'alimentation (41, 44) de manière à amener en contact et hors de contact lesdits moyens de balais d'alimentation (41, 44) avec le côté d'alimentation,
**caractérisé en ce que**,
ledit moteur est un moteur à combustion interne à quatre temps comprenant un système de commande de soupapes (60, 69, 72, 69) destiné à commander une soupape d'admission (95) et une soupape d'échappement (96) aménagées sur ladite culasse (32) et des moyens d'entraînement (59) destinés audit système de commande de soupapes aménagés sur un côté dudit vilebrequin (12), dans lequel ledit rotor interne (15) est disposé sur une partie d'extrémité dudit vilebrequin (12) du côté sur lequel sont disposés lesdits moyens d'entraînement (59), lesdits moyens de régulateur (54) étant disposés sur le rotor interne (15) du côté adjacent aux dits moyens d'entraînement (59), et dans lequel un élément de bride (39) est disposé sur une extrémité axiale d'un bossage de rotor (16) du côté opposé au vilebrequin (12), de telle sorte qu'une partie du bossage de rotor (16) étant en butée contre un boulon (20) et une partie cylindrique (40) du bossage de rotor (16) supportant le porte-balais (41) sont situées dans le sens axial entre ledit vilebrequin (12) et ledit élément de bride (39), ledit bossage de rotor (16) et ledit élément de bride (39) étant fixés conjointement sur le vilebrequin (12) au moyen du boulon (20), dans lequel l'élément de bride (39) est disposé dans le sens axial entre ledit bossage de rotor (16) et la tête dudit boulon (20).

2. Moteur à combustion interne selon la revendication 1, **caractérisé en ce que** ladite partie cylindrique (40) est en saillie du côté de l'élément de bride (39), dans lequel ledit porte-balais (41), qui est une partie desdits moyens de balais d'alimentation (41, 44), est disposé sur une périphérie externe de ladite partie cylindrique (40) et est adapté pour se déplacer en coulissement sur ladite partie cylindrique (40).

3. Moteur à combustion interne selon la revendication 1 ou la revendication 2, **caractérisé en ce que** lesdits moyens de régulateur (54) comprennent une poche (56) destinée à y loger une masselotte de régulateur (55), ladite poche (56) ayant une coupe transversale conique qui est concave du côté radial externe, ladite coupe transversale conique étant procurée par une paroi de poche intégralement formée sur ledit bossage de rotor (16).

4. Moteur à combustion interne selon la revendication 3, **caractérisé en ce que** lesdits moyens de régulateur (54) comprennent une plaque (46) qui peut se déplacer dans une direction axiale, ledit déplacement de ladite plaque (46) provoquant un déplacement d'un porte-balais (41) qui est une partie desdits moyens de balais d'alimentation (41, 44).

5. Moteur à combustion interne selon la revendication 4, **caractérisé en ce que** ladite plaque (46) est une plaque plane.
